# EUROPÄISCHE PATENTANMELDUNG

(11) **EP 1 244 196 A2**
(43) Veröffentlichungstag der Anmeldung: **25.09.2002**
(21) Anmeldenummer: 02005203.1
(22) Anmeldetag: 07.03.2002
(51) Int. Cl.: H02K 7/09, F16C 39/06, F16F 15/02, D02J 13/00, B65H 54/46, B65H 51/06

(54) **Walze zum Führen von zumindest einem Faden**

(30) Priorität: 15.03.2001 DE 10112423
(71) Anmelder: Neumag GmbH & Co. KG, 24536 Neumünster (DE)
(72) Erfinder: Laukien, Dirk, 24118 Kiel (DE)
(74) Vertreter: Kahlhöfer, Hermann, Dipl.-Phys.

(57) **Zusammenfassung**

Es ist eine Walze zum Führen von zumindest einem Faden mit einem hohlzylindrischen Walzenmantel beschrieben. Der hohlzylindrische Walzenmantel (1) ist an einem Träger (4) durch zumindest ein radial wirkendes Magnetlager (9) gelagert. Das Magnetlager (9) weist hierzu mehrere Lagerpolwicklungen (11) am Träger (4) auf, die in Umfangsrichtung des Walzenmantels (1) verteilt sind. Zur Steuerung des Magnetlagers wird die Istlage des Walzenmantels durch mehrere Sensoren (19) erfaßt, wobei die Sensoren (19) und die Lagerpolwicklungen (11) durch eine Steuereinheit (21) miteinander gekoppelt sind. Erfindungsgemäß sind die Sensoren (19) mit Abstand zu dem Walzenmantel und mit Abstand zu dem Träger derart ortsfest positioniert, daß die Istlage des Walzenmantels (1) relativ zu einer ortsfesten Referenzlage des Walzenmantels (1) bestimmbar ist.

Des Weiteren ist ein Verfahren zu Schwingungsdämpfung eines drehbar gelagerten Walzenmantels einer Walze beschrieben, bei welchem der Walzenmantel durch zumindest ein radial wirkendes Magnetlager (9) gelagert ist. Hierbei wird neben der Istlage des Walzenmantels (1) relativ zu einer ortsfesten Referenzlage des Walzenmantels die zeitliche Veränderung der Istlage in Abhängigkeit einer Drehfrequenz des Walzenmantels erfaßt. Aus der Veränderung der Istlage wird eine Folge von Steuersignalen für das Magnetlager erzeugt, die bei der Drehfrequenz eine der Lageränderung des Walzenmantels entgegenwirkende Lagerkraft in dem Magnetlager (9) bewirkt.

## Beschreibung

Die Erfindung betrifft eine Walze zum Führen von zumindest einem Faden gemäß dem Oberbegriff des Anspruchs 1 sowie ein Verfahren zur Schwingungsdämpfung eines drehbar gelagerten Walzenmantels einer Walze.

In Spinnanlagen oder Textilmaschinen werden Walzen in unterschiedlicher Art und Form eingesetzt, um einen oder mehrere Fäden zu führen. So werden derartige Walzen als Galetten eingesetzt, die zum Fördern, Verstrecken oder Erwärmen von Fäden verwendet werden. Ebenso sind Walzen bekannt, die beim Aufwickeln eines Fadens als Andrückwalze den Faden zu einer Spulenoberfläche führen. Alle genannten Walzen haben gemein, daß der Walzenmantel drehbar gelagert ist, um mit einer Umfangsgeschwindigkeit, die im wesentlichen gleich der Fadengeschwindigkeit sein kann, betrieben zu werden. Hierzu ist der Walzenmantel mittels Lager an einem Träger gelagert. Aus der EP 0 770 719 B1 oder der DE 197 33 239 A1 sind Walzen in Form von Galetten bekannt, bei welchen der Walzenmantel magnetisch gelagert ist. Hierzu ist zumindest ein radial wirkendes Magnetlager vorgesehen, das mehrere am Träger verteilte Lagerpolwicklungen aufweist. Die Lagerpolwicklungen sind gleichmäßig am Umfang des Walzenmantels verteilt. Den Lagerpolwicklungen sind Sensoren zugeordnet, die einen Lagerspalt zwischen dem Galettenmantel und der Lagerpolwicklung sensieren. Die Sensoren und die Lagerpolwicklungen sind gemeinsam an dem Träger angebracht, so daß der Walzenmantel in seiner Lage relativ zum Träger ausregelbar ist. Bei den bekannten Walzen tritt jedoch das Problem auf, daß aufgrund von Resonanzen und von außen eingeleiteten Maschinenschwingungen der Träger Schwingungen ausführt, die sich negativ auf die Lageregelung des Galettenmantels auswirken. Bei ungünstigen Bedingungen besteht sogar die Möglichkeit, daß der Walzenmantel eine zusätzliche Schwingungserregung erhält, die zu einer Instabilität der Lagerung führt.

Es ist Aufgabe der Erfindung, eine Walze der eingangs genannten Art derart weiterzubilden, daß der drehbare Walzenmantel möglichst schwingungsarm gelagert ist.

Ein weiteres Ziel der Erfindung ist es, die Gefahr von Verformungen durch Resonanzschwingungen an der Walze zu vermeiden.

Die Aufgabe wird durch eine Walze mit den Merkmalen nach Anspruch 1 gelöst.

Eine weitere Lösung der zugrundeliegenden Aufgabe ist durch das Verfahren zur Schwingungsdämpfung eines drehbar gelagerten Walzenmantels einer Walze gemäß dem Anspruch 11 gegeben.

Vorteilhafte Weiterbildungen der Erfindung sind in den Unteransprüchen 2 bis 10 sowie 12 und 13 definiert.

Die Erfindung zeichnet sich dadurch aus, daß bei der magnetischen Lagerung des Walzenmantels die Sensorik und die Aktorik voneinander entkoppelt sind. Dadurch können die Schwingungen in dem Träger sich nicht auf die Lage des Walzenmantels auswirken. Hierzu sind die Sensoren zur Bestimmung einer Istlage des Walzenmantels mit Abstand zu dem Walzenmantel und mit Abstand zu dem Träger derart ortsfest positioniert, daß die Istlage des Walzenmantels relativ zu einer ortsfesten Referenzlage des Walzenmantels bestimmbar ist. Die Referenzlage des Walzenmantels bildet hierbei die Stellung des Walzenmantels, die während des Betriebes eine optimale Funktion der Walze gewährleistet. Als ortsfeste Referenzlage kann somit eine in einer Maschine vordefinierte Lage des Walzenmantels bezeichnet sein. Hierbei besteht auch die Möglichkeit, daß die in der Maschine definierte Position der Walze sich während des Betriebes verändert wie beispielsweise bei einer durch den Spulenzuwachs ausweichenden Andrückwalze. Hierbei würde die funktionsbedingte Änderung der Lage jeweils eine ortsfeste Referenzlage bilden. Wesentlich für die Erfindung ist hierbei, daß die Lageerfassung des Walzenmantels unabhängig von der Wechselwirkung zwischen dem Träger und dem Walzenmantel und somit unabhängig von dem Lagerspalt zwischen den jeweiligen Lagerpolwicklungen und dem Walzenmantel erfolgt.

Um bei auskragend gelagerten Walzenmänteln eine Lageerfassung des Walzenmantels zu ermöglichen, wird gemäß einer vorteilhaften Weiterbildung der Erfindung vorgeschlagen, die Sensoren durch mehrere auskragende Sensorträger zu fixieren. Die Sensorträger sind dabei jeweils mit einem Ende fest mit dem Maschinengestell verbunden. An dem gegenüberliegenden auskragenden Ende wird vorzugsweise ein Sensor befestigt, der eine definierte Position zu der ortsfesten Referenzlage des Walzenmantels besitzt.

Insbesondere bei Galetten, bei welchen am Umfang des Walzenmantels mehrere Fäden geführt werden, ist die Weiterbildung der Erfindung gemäß Anspruch 3 besonders vorteilhaft. In diesem Fall sind die Sensorträger innerhalb eines zwischen dem Walzenmantel und dem Träger gebildeten Ringraumes angeordnet, so daß der äußere Bereich der Walze völlig frei bleibt.

Die Sensoren und die Lagerpolwicklungen können dabei vorteilhaft gemeinsam in einer Lagerebene angeordnet sein, so daß eine sehr schnelle und präzise Lageregelung des Walzenmantels durch das Magnetlager ausführbar ist.

Es ist jedoch auch möglich, die Sensoren und/oder die Lagerpolwicklungen in mehreren benachbarten Ebenen anzuordnen. Die Anordnung der Lagerpolwicklungen in mehreren Lagerebenen besitzt den Vorteil, daß eine hohe Tragfähigkeit und eine besonders günstige Steifigkeit der Lagerung erreicht wird. Insbesondere bei lang auskragenden Walzen ist eine derartige Anordnung bevorzugt. Die Lagerpolwicklungen können dabei von Lagerebene zu Lagerebene winkelversetzt am Träger positioniert sein. Die Sensoren lassen sich hierbei jeweils in der jeweiligen Lagerebene oder in einer benachbarten Ebene anordnen.

Zur Steuerung der Lagerpolwicklungen sind grundsätzlich zwei verschiedene vorteilhafte Ausführungen der Walze möglich. Bei einer ersten Ausführungsvariante ist jeder der Lagerpolwicklungen einer der Sensoren zugeordnet. Durch die Steuereinheit wird dabei das Sensorsignal des Sensors in ein Steuersignal zur Steuerung der zugeordneten Lagerpolwicklung überführt. Bei dieser Anordnung wird unmittelbar der Abstand zwischen dem Sensor und dem Walzenmantel gemessen und als Sensorsignal der Steuereinheit aufgegeben. Die Abweichung zwischen einem Sollabstand, der die Referenzlage des Walzenmantels darstellt und dem Istabstand zwischen dem Sensor und dem Walzenmantel wird hierbei als Maß zur Bildung des Steuersignals herangezogen.

Es besteht jedoch auch die Möglichkeit, die Istlage des Walzenmantels durch eine Gruppe von Sensoren zu erfassen, die vorteilhaft in einer Ebene angeordnet sind. Die Sensorsignale werden sodann in der Steuereinheit zu einer Istlage des Walzenmantels berechnet, aus der die Steuersignale zur Ansteuerung der jeweiligen Lagerpolwicklungen gebildet werden. Dabei erfolgt eine Umrechnung derart, daß die zwischen den Lagerpolwicklungen und dem Walzenmantel bestehenden Lagerspalte eine zur Erreichung der Referenzlage notwendige Veränderung erhalten.

Eine weitere Alternative wird durch die Weiterbildung der Walze gemäß Anspruch 7 gebildet. Hierbei sind die Lagerpolwicklungen paarweise um 180° versetzt zueinander in einer Lageebene angeordnet. Jedem Lagerpolpaar ist dabei ein Sensor zugeordnet, wobei die Steuereinheit das Sensorsignal des Sensors in ein Steuersignal zur Steuerung des zugeordneten Lagerpolpaares überführt.

Zur Ausführung einer möglichst schwingungsarmen und stabilen Lagerung des Walzenmantels wird gemäß der vorteilhaften Weiterbildung der Erfindung nach Anspruch 9 vorgeschlagen, den Walzenmantel durch zwei radial wirkende Magnetlager zu lagern. Jedem Magnetlager ist hierbei eine Gruppe von Sensoren zugeordnet, welche jeweils in einer benachbarten Ebene zwischen den Lagerebenen angeordnet sind. Damit besteht die Möglichkeit, neben der Lageerfassung eine zeitliche Veränderung der Lage des Walzenmantels zu messen, die sich aufgrund von Schwingungen in dem Walzenmantel auswirken.

Somit läßt sich eine der Lagerung des Walzenmantels überlagerte Schwingungsdämpfung durch die Magnetlager ausführen. Jede Gruppe von Sensoren ist hierzu mit einer Steuereinheit verbunden, die eine Auswertung der Sensorsignale im Hinblick auf eine Lage- und Schwingungsbestimmung des Walzenmantels ausführt. Die durch die Steuereinheit erzeugten Steuersignale werden sodann zur Lagekorrektur und Schwingungsdämpfung den jeweiligen Lagerpolwicklungen aufgegeben.

Durch die besonders bevorzugte Weiterbildung der Erfindung nach den Ansprüchen 9 und 10 läßt sich das erfindungsgemäße Verfahren zur Schwingungsdämpfung eines drehbar gelagerten Walzenmantels ausführen. Das erfindungsgemäße Verfahren besitzt den Vorteil, daß mit den Magnetlagern Lagerkräfte erzeugt werden, die einer auftretenden Schwingung in Amplitude und Frequenz entgegenwirken. Die Dämpfungswirkung wird somit nur im Fall einer auftretenden Schwingung wirksam. In den Betriebszuständen, in denen keine relevanten Schwingungen auftreten, ist keine Dämpfung wirksam. Bei dem erfindungsgemäßen Verfahren wird die Istlage des Walzenmantels relativ zu einer ortsfesten Referenzlage des Walzenmantels erfaßt. Gleichzeitig wird eine zeitliche Veränderung der Istlage des Walzenmantels in Abhängigkeit einer Drehfrequenz des Walzenmantels erfaßt, die zu einer Folge von Steuersignalen für das Magnetlager umgewandelt wird. Die Steuersignale bewirken dabei in dem Magnetlager die Erzeugung von Lagerkräften, die der schwingungsbedingten Lageänderung des Walzenmantels entgegenwirken. Durch die Folge von Steuersignalen wird so das Magnetlager bei der Drehfrequenz gesteuert, so daß die Schwingungen unmittelbar nach Auftreten unterdrückt werden.

Bei einer vorteilhaften Verfahrensvariante wird die Istlage des Walzenmantels in zwei Meßstellen erfaßt. Damit besteht die Möglichkeit, Resonanzschwingungen erster oder zweiter Ordnung zu ermitteln. In der ersten Resonanz wäre die Phasenlage der zeitlichen Veränderungen der Istlage in den beiden Meßstellen gleich. Bei einer Resonanz zweiter Ordnung wäre dagegen die Phasenlage der zeitlichen Veränderung der Istlage des Walzenmantels in den beiden Meßpunkten um 180° verschoben. Jeder der Meßstellen ist jeweils eine Lagerstelle mit einem Magnetlager zugeordnet, so daß die Magnetlager durch jeweils eine Folge von Steuersignalen zur Dämpfung der Schwingungen gesteuert werden.

Zur Erfassung der Istlage sowie der zeitlichen Veränderung der Istlage des Walzenmantels werden vorzugsweise vier Sensoren in einer Meßstelle verwendet, die um 90° versetzt zueinander in einer Ebene und im Umfang des Walzenmantels verteilt angeordnet sind. Damit wird eine hohe Genauigkeit bei der Lageerfassung und der Schwingungsbestimmung gewährleistet.

Einige Ausführungsbeispiele der erfindungsgemäßen Walze sind im folgenden unter Hinweis auf die beigefügten Zeichnungen näher beschrieben.

Es stellen dar:
- Fig. 1 bis 3: schematisch ein erstes Ausführungbeispiel der erfindungsgemäßen Walze;
- Fig. 4 und 5: schematisch ein weiteres Ausführungsbeispiel der erfindungsgemäßen Walze;
- Fig. 6: ein Schema einer Lagersteuerung einer erfindungsgemäßen Walze.

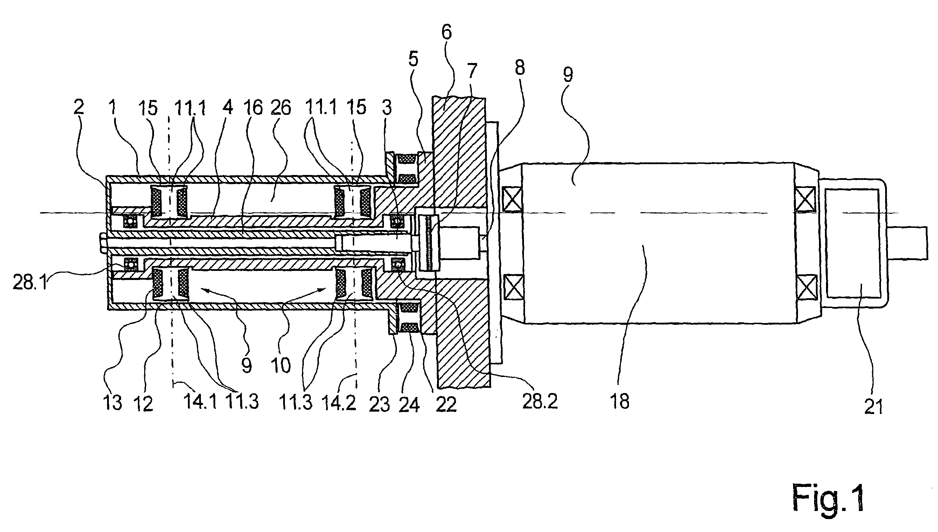

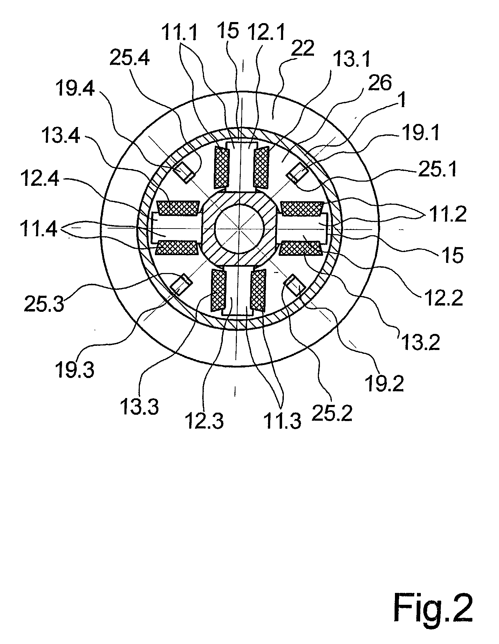

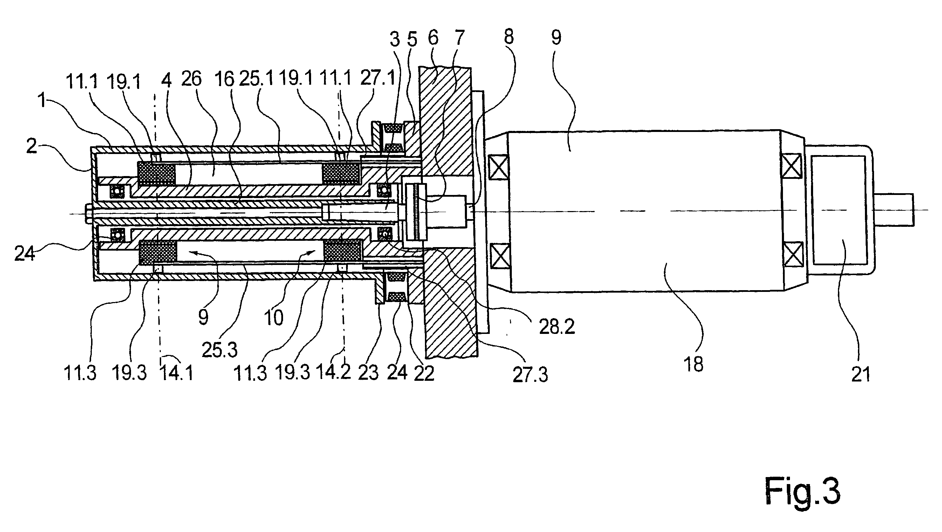

In den Figuren 1 bis 3 ist ein erstes Ausführungsbeispiel der erfindungsgemäßen Walze in Form einer Galette dargestellt. Die Figur 1 zeigt die für die Erfindung wesentlichen Teile der Galette anhand eines parallel zur und durch die Drehachse verlaufenden Schnittes, Fig. 2 einen Schnitt durch eine der Lagerebenen senkrecht zur Drehachse 18 und Fig. 3 einen parallel zur Drehachse 18 verlaufenden Schnitt winkelversetzt zu der in Fig. 1 gezeigten Darstellung der erfindungsgemäßen Walze. Die nachfolgende Beschreibung gilt somit für die Figuren 1 bis 3, insoweit kein ausdrücklicher Bezug zu einer der Figuren genommen ist. Das Ausführungsbeispiel der erfindungsgemäßen Walze ist als Galette ausgebildet. Die Galette weist einen Walzenmantel 1 auf, der über eine Stirnwand 2 und eine Nabe 16 mit einer im Innern des Walzenmantels 1 verlaufenden Welle 3 drehfest verbunden ist. Die Welle 3 ist mit ihrem gegenüberliegenden Ende über eine Kupplung 7 an eine Motorwelle 8 eines Motors 9 angeschlossen. Der als Elektromotor ausgebildete Motor 9 ist in der Fig. 1 und Fig. 3 nicht in Einzelheiten dargestellt.

Der Walzenmantel 1 ist durch zwei radial wirkende Magnetlager 9 und 10 an einem auskragenden Träger 4 gelagert. Der Träger 4 ist hohlzylindrisch ausgebildet und erstreckt sich innerhalb des Walzenmantels 1 bis kurz vor die Stirnwand 2. Der hohlzylindrische Träger 4 wird hierbei von der Welle 3 und der Nabe 16 durchdrungen. Auf der zur Stirnwand 2 gegenüberliegenden Seite ist der Träger 4 über einen Bund 5 an einem Maschinengestell 6 befestigt.

Die Magnetlager 9 und 10 sind in Abstand zueinander am Umfang des Trägers 4 angebracht, wobei sich das Magnetlager 9 an einem freien Ende des Trägers 4 und das Magnetlager 10 im Bereich des fest eingespannten Endes des Trägers 4 befindet. Die Magnetlager 9 und 10 weisen jeweils vier Lagerpolwicklungen 11.1 bis 11.4 auf, die an dem Träger 4 jeweils in einer Lagerebene 14 verteilt angeordnet sind. Jede der Lagerpolwicklungen 11 besteht aus einer Erregerwicklung 12 und einem Polelement 13. Die Lagerpolwicklungen 11.1 bis 11.4 weisen dementsprechend die Polelemente 12.1 bis 12.4 auf. Die Lagerpolwicklungen 11 der jeweiligen Magnetlager 9 und 10 sind identisch ausgebildet. Zwischen den Lagerpolwicklungen 11 und dem Walzenmantel 1 ist jeweils ein Lagerspalt 15 gebildet. Im Bereich der Lagerebenen 14 ist der Walzenmantel 1 ferromagnetisch ausgebildet, so daß zwischen den Lagerpolwicklungen 11 und dem Walzenmantel 1 eine magnetische Kraft erzeugbar ist. Die Lage des Walzenmantels 1 wird durch mehrere Sensoren 19 überwacht. Hierzu sind in den Lagerebenen 14.1 und 14.2 jeweils vier Sensoren 19.1 und 19.4 in Umfangsrichtung zwischen den Lagerpolwicklungen 11.1 bis 11.4 angeordnet. Die Sensoren 19.1 und 19.4 werden jeweils durch einen Sensorträger 25 gehalten. Der Sensorträger 25 ist stangenförmig ausgebildet und mit einem Ende fest mit dem Maschinengestell 6 verbunden. Der Sensorträger 25 ragt durch eine Öffnung 27 in den zwischen dem Träger 4 und dem Walzenmantel 1 gebildeten Ringraum 26 hinein. Innerhalb des Ringraumes 26 ist an dem Sensorträger 25 im Bereich der Lagerebenen 14.1 und 14.2 jeweils ein Sensor zur Erfassung der Lage des Walzenmantels angebracht. Die Sensoren 19 sind hierbei vorzugsweise als Abstandsensoren ausgebildet, die einen zwischen dem Walzenmantel 1 und dem Sensor 19 gebildeten Spalt überwachen.

Wie aus Fig. 2 hervorgeht, sind insgesamt vier Sensorträger 25.1, 25.2, 25.3 und 25.4 in dem Ringraum 26 angeordnet. Die Sensorträger 25.1 bis 25.4 sind hierbei um 45° versetzt zwischen den Lagerpolwicklungen 11.1 bis 11.4 angeordnet. An jedem der Sensorträger 25.1 bis 25.4 befinden sich zwei Sensoren 19, die jeweils im Bereich der Lagerebenen 14.1 und 14.2 positioniert sind.

Die Sensoren 19 in den Lagerebenen 14.1 und 14.2 sind durch eine Steuereinheit 21 mit den Lagerpolwicklungen 11 der Magnetlager 9 und 10 zu jeweils einem Regelkreis gekoppelt.

Wie in Fig. 1 und 3 dargestellt, ist der Durchmesser des Bundes 5 des Trägers 4 an seinem dem Maschinengestell 6 zugewandten Ende größer als die beiden übereinstimmenden Durchmesser der Stirnwand 2 und des Walzenmantels 1. Der Bund 5 des Trägers 4 weist zum Walzenmantel 1 hin eine Stufe 22 mit einer ringförmigen Fläche auf, wobei der Durchmesser des Bundes 5 nach der Stufe 22 etwas kleiner ist als der Innendurchmesser des Walzenmantels 1. Der Walzenmantel 1 erstreckt sich mit seinem freien, der Stirnwand 2 gegenüberliegenden Ende bis vor die Stufe 22 und weist an diesem Ende einen schmalen Bund 23 auf. Der Durchmesser des Bundes 23 entspricht dem Durchmesser des verglichen mit dem Bund 23 breiteren Bundes 5 des Trägers 4 an dessen dem Maschinengestell 6 zugewandten Ende. An dem Bund 23 des Walzenmantels 1 befindet sich ein magnetisches Axiallager 24. Dabei sind mit Erregerwicklungen versehene Lagerpolelemente des Axiallagers 24 auf der Stufe 22 des Bundes 5 des Trägers 4 angeordnet und weisen zu dem Bund 23 des Walzenmantels 1.

Außerdem ist mindestens ein als Fanglager dienendes, mechanisches, berührungsfreies Radiallager 28 vorgesehen. In diesem Beispiel weisen die Enden des Trägers 4 zur Nabe 16 des Walzenmantels 1 hin ringförmige Einbuchtungen auf, die jeweils eines der auf den Träger 4 angeordneten Radiallager 28 aufnehmen. Zwischen den Radiallagern 28.1 und 28.2 und der Nabe 16 befinden sich kleine Spalte.

Durch die Radiallager 28.1 und 28.2 ist somit ein Notlauf des Walzenmantels unabhängig von der Magnetlagerung gewährleistet.

Das in Fig. 1 bis 3 dargestellte Ausführungsbeispiel der Walze wird insbesondere als Galette zum Fördern, thermischen Behandeln und Verstrecken von Fäden eingesetzt. Hierbei werden die Fäden am Umfang des Walzenmantels 1 geführt, der durch den Elektromotor 9 mit einer vorbestimmten Umfangsgeschwindigkeit angetrieben wird. Hierbei wird die Istlage des Walzenmantels kontinuierlich durch die Sensoren 19.1 bis 19.4 sowohl in der Lagerebene 14.1 als auch in der Lagerebene 14.2 gemessen. Die Sensorsignale werden der auf der Antriebsseite angeordneten Steuereinheit 21 zugeführt. In der Steuereinheit 21 ist eine Referenzlage des Walzenmantels 1 hinterlegt. Die Referenzlage des Walzenmantels 1 ist hierbei eine zum Maschinengestell 6 ortsfest Position des Walzenmantels 1. Diese ortsfeste Referenzlage des Walzenmantels 1 ist somit durch definierte Abstände zu den Sensoren 19 bestimmt. Die Sensoren 19 sind über die Sensorträger 25 entkoppelt von dem Träger 4 und dem Walzenmantel 1. Somit treten keine aus der Rotation des Walzenmantels hervorgerufenen Schwingungen an den Sensorträgern 25 auf. Dadurch ist die Sensorik zur Lageerfassung des Walzenmantels entkoppelt zur Aktorik der Lagerung des Walzenmantels.

In der Steuereinheit 21 wird aus den Sensorsignalen die Istlage des Galettenmantels ermittelt, um somit aus der Abweichung zwischen der Istlage des Walzenmantels und der Referenzlage des Walzenmantels entsprechende Steuersignale zur Korrektur der Lage zu erzeugen. Die Steuersignale werden über jeweils ein Steuergerät den Magnetlagern 9 und 10, insbesondere den Lagerpolwicklungen 11.1 bis 11.4 aufgegeben, die die zwischen den Lagerpolwicklungen 11 und dem Walzenmantel 1 wirkenden magnetischen Kräfte verändern, um somit eine Lagekorrektur des Walzenmantels herbeizuführen.

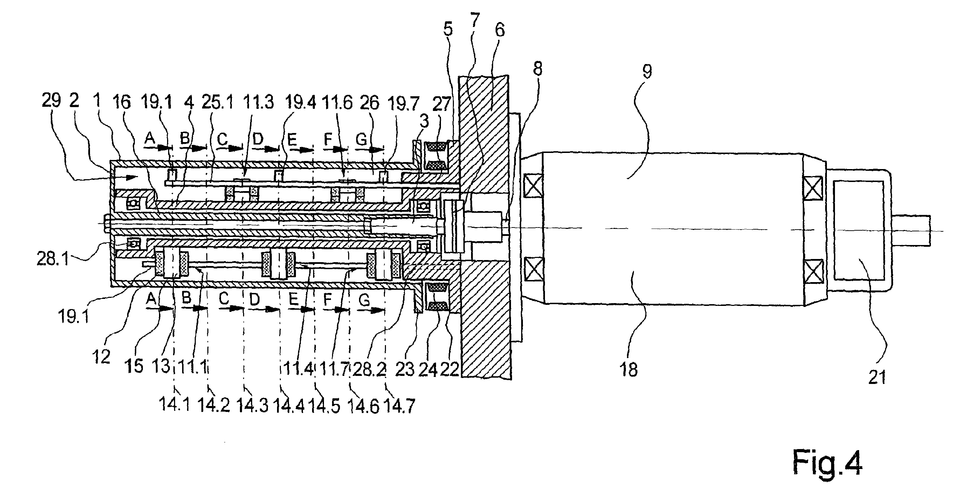

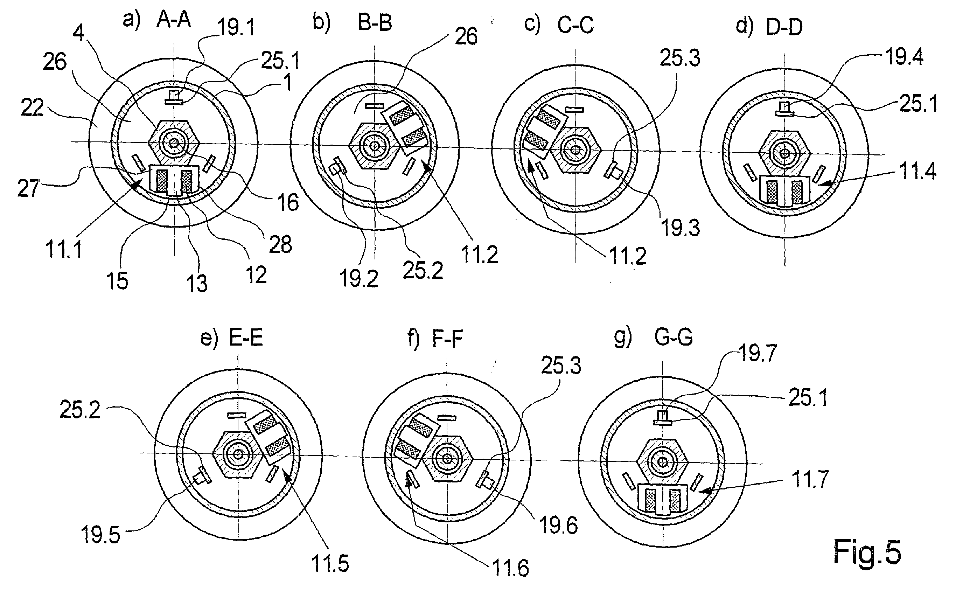

In den Figuren 4 und 5 ist ein weiteres Ausführungsbeispiel einer erfindungsgemäßen Walze in Form einer Galette dargestellt. Die Figur 4 zeigt die für die Erfindung wesentlichen Teile der Walze anhand eines parallel zur und durch die Drehachse 18 verlaufenden Schnitts und Fig. 2a) bis g) anhand der Lagerebenen entsprechenden Schnitte senkrecht zur Drehachse.

Die nachfolgende Beschreibung gilt somit für die Figuren 4 und 5, insoweit kein ausdrücklicher Bezug zu einer der Figuren genommen ist. Das Ausführungsbeispiel entspricht dem Ausführungsbeispiel der erfindungsgemäßen Walze nach Fig. 1 bis 3 im wesentlichen, so daß nachfolgend nur die Unterschiede erläutert werden und im übrigen Bezug auf die vorhergehende Beschreibung genommen wird. Die Bauteile mit gleicher Funktion haben zur Übersichtlichkeit identische Bezugszeichen erhalten.

Der Walzenmantel 1 ist durch ein radial wirkendes Magnetlager 29 an dem auskragenden Träger 4 gelagert. Das Magnetlager 29 weist mehrere Lagerpolwicklungen 11 auf, die an dem zylindrischen Träger 4 in mehreren Lagerebenen 14 verteilt angeordnet sind. Jede der Lagerpolwicklungen 11 besteht aus einer Erregerwicklung 12 und einem Polelement 13. Insgesamt sind an dem Außenumfang des Trägers 4 sieben Lagerpolwicklungen 11.1 bis 11.7 in sieben nebeneinander liegenden Lagerebenen 14.1 bis 14.7 angeordnet. Dabei sind die Lagerpolwicklungen 11.1 bis 11.7 von Lagerebene zu Lagerebene winkelversetzt am Träger 4 verteilt angeordnet.

In der Fig. 5 ist jeweils ein Querschnitt jeder Lagerebene 14.1 bis 14.7 der Walze gezeigt, wobei die Lagerebene 14.1 in Fig. 5a), die Lagerebene 14.2 in Fig. 5b), die Lagerebene 14.3 in Fig. 5c) usw. dargestellt sind. Die Lagerpolwicklungen 11.1 bis 11.7 sind von Lagerebene zu Lagerebene winkelversetzt an dem Träger 4 verteilt angeordnet. Die Winkelpositionen der Lagerpolwicklungen 11.1 bis 11.7 betragen 180°, 60°, 300°, 180°, 60°, 30° und 180°. Der Winkelversatz der Lagerpolwicklungen 11.1 bis 11.7 von Lagerebene zu Lagerebene beträgt somit 120°. Die Lagerpolwicklungen 11.1 bis 11.7 bilden eine Spirale um eine Drehachse 18 mit aufgrund gleichen Winkelversätzen und der gleichen Abstände zwischen den Lagerebenen konstanter Steigung. Zwischen jeder der Lagerpolwicklungen 11.1 und 11.7 und dem Walzenmantel 1 ist jeweils ein Lagerspalt 15 gebildet.

Zur Überwachung des Lagespalts 15 bzw. zur Erfassung der Istlage des Walzenmantels 1 ist jedem der Lagerpolwicklungen 11.1 bis 11.7 ein Sensor 19 zugeordnet. Die Sensoren 19.1 bis 19.7, wobei in der Fig. 4 nur die Sensoren 19.1, 19.4, 19.7 sichtbar sind, sind an mehreren Sensorträgern 25 identisch zu dem vorhergehenden Ausführungsbeispiel ausgebildet und fest an dem Maschinengestell 6 angebracht. Wie aus Fig. 5 hervorgeht, sind insgesamt drei Sensorträger 25 in dem zwischen dem Träger 4 und dem Walzenmantel 1 gebildeten Ringraum 26 angeordnet. Die Sensorträger 25.1, 25.2 und 25.3 weisen einen Winkelversatz von 120° auf. An dem Sensorträger 25.1 sind der Sensor 19.1 in der Lagerebene 14.1, der Sensor 19.4 in der Lagerebene 14.4 und der Sensor 19.7 in der Lagerebene 14.7 angebracht. An dem um 120° versetzt angeordneten Sensorträger 25.2 sind der Sensor 19.3 in der Lagerebene 14.3 und der Sensor 19.6 in der Lagerebene 14.6 angebracht. An dem wiederum um 120° versetzt angeordneten Sensorträger 25.3 sind die Sensoren 19.2 in der Lagerebene 14.2 und 19.5 in der Lagerebene 14.5 angebracht. Die Sensoren 19 sind dabei jeweils den Lagerebenen 14 gegenüberliegend, also um 180° versetzt zu den Lagerpolwicklungen 11 angeordnet. Die Sensoren 19.1 bis 19.7 sind über nicht dargestellte Signalleitungen mit einer Steuereinheit 21 gekoppelt. Die Steuereinheit 21 ist über ein Steuergerät und Steuerleitungen mit den Erregerwicklungen 12 der Lagerpolwicklungen 11.1 bis 11.7 verbunden.

Im Betrieb wird die Istlage des Walzenmantels 1 durch die Sensoren 19.1 bis 19.7 gemessen und der Steuereinheit 21 zugefährt. Innerhalb der Steuereinheit wird die Istlage des Walzenmantels mit einer hinterlegten Differenzlage des Walzenmantels vergleichen. Hierbei wird unmittelbar jedes einzelne Sensorsignal in ein entsprechendes Steuersignal zur Ansteuerung der jeweils zugeordneten Lagerpolwicklung 11 überführt. So läßt sich aus dem Signal des Sensors 19.1, welches den momentanen Abstand zwischen dem Sensor 19.1 und dem Walzenmantel 1 signalisiert, die Abweichung zu einem Sollabstand, welcher die ortsfeste Referenzlage des Walzenmantels definiert, ermittelt. Daraufhin wird ein Steuersignal zur Ansteuerung der Lagerpolwicklung 11.1 in der Steuereinheit 21 erzeugt und über ein Steuergerät unmittelbar der Lagerpolwicklung 11.1 aufgegeben. Die veränderte Erregung der Lagerpolwicklung 11 führt zu einer gewünschten Veränderung der magnetischen Kraft, so daß eine unmittelbare Lagekorrektur des Walzenmantels 1 ausgeführt wird. Dementsprechend werden die Lagerpolwicklungen 11.2 bis 11.7 jeweils durch Auswertung der Sensorsignale der Sensoren 19.2 bis 19.7 gesteuert. Durch das Zusammenwirken der Lagerpolwicklungen 11.1 bis 11.7 wird eine flächige Lagerung des Walzenmantels 1 erreicht.

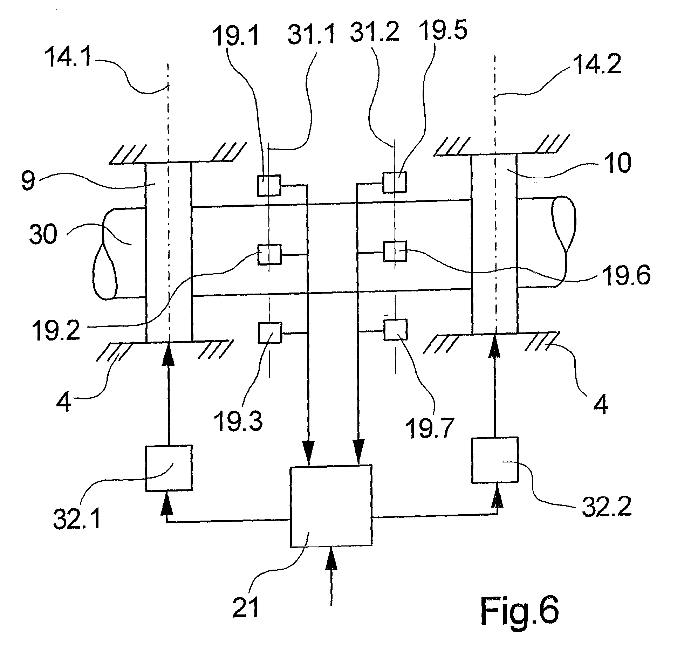

In Fig. 6 ist ein Schema einer Lagersteuerung dargestellt, wie sie beispielsweise in dem Ausführungsbeispiel der Walze nach Fig. 1 bis 3 ausführbar wäre. Hierbei ist der Walzenmantel durch eine Welle 30 charakterisiert. Die Welle 30 wird an zwei Stellen durch die Magnetlager 9 und 10 gelagert. Hierbei könnten die Magnetlager 9 und 10 entsprechend dem Ausführungsbeispiel nach Fig. 1 ausgebildet sein. Die Magnetlager 9 und 10, die sich an einem Träger 4 abstützen, bilden jeweils eine Lagerebene 14.1 und 14.2. Zwischen den Lagerebenen 14.1 und 14.2 sind zwei Gruppen von Sensoren in zwei Ebenen 31.1 und 31.2 angeordnet. Die Ebenen 31.1 und 31.2 erstrecken sich parallel zu den Lagerebenen 14.1 und 14.2. In der Ebene 31.1 sind die Sensoren 19.1, 19.2, 19.3 und 19.4 angeordnet, die gleichmäßig am Umfang der Welle verteilt angeordnet sind, um eine Istlage der Welle 30 zu erfassen. Der Sensor 19.4 in der Ebene 31.1 liegt auf der Rückseite der Welle 30 und ist hierbei nicht sichtbar.

In der Ebene 31.2 sind die Sensoren 19.5, 19.6, 19.7 und 19.8 (nicht sichtbar) ebenfalls gleichmäßig am Umfang der Welle 30 verteilt angeordnet. Die Sensoren 19 sind jeweils ortsfest positioniert, um die Lage der Welle 30 zu erfassen. Die Sensoren 19.1 bis 19.4 sowie die Sensoren 19.1 bis 19.8 sind mit einer Steuereinheit 21 verbunden. Innerhalb der Steuereinheit 21 ist zumindest ein Mikroprozessor vorgesehen, welcher die jeweiligen Sensorsignale zu einer Istlage der Welle der Ebene 31.1 und 31.2 überführt. In Abhängigkeit von der Abweichung zwischen der Istlage und der in der Steuereinheit 21 hinterlegten Referenzlage werden Steuersignale erzeugt, die von der Steuereinheit 21 über jeweils ein Steuergerät 32.1 und 32.2 den Magnetlagern 9 und 10 zur Veränderung der Lagerspalte aufgegeben werden.

Die in Fig. 6 dargestellte Lagersteuerung ist insbesondere geeignet, um Schwingungen eines Walzenmantels zu erkennen und zu dämpfen. Hierzu werden aus den Sensorsignalen, die die Istlage der Welle bzw. eines Walzenmantels signalisieren, zeitliche Veränderungen der Istlage der Welle bzw. des Walzenmantels ermittelt und in Bezug zu der jeweiligen Drehfrequenz der Welle gebracht. Innerhalb der Steuereinheit wird daraufhin eine Folge von Steuersignalen für das zugeordnete Magnetlager erzeugt, welche Steuersignale eine der Lageänderung der Welle entgegenwirkenden Lagerkräfte an der Welle bewirken. Über das Steuergerät 32 wird bei der entsprechenden Drehfrequenz die Folge der Steuersignale den Magnetlagern aufgegeben.

Durch die Ausbildung zweier Ebenen 31.1 und 31.2, die jeweils eine Meßstelle zur Lageerfassung der Welle darstellen, besteht die Möglichkeit, Schwingungsformen der Welle durch Abgleich der Signale zu erkennen. So sind beispielsweise bei einer Resonanzschwingung erster Ordnung die charakteristischen Abstandssignale der Sensoren in der Meßstelle 31.1 und der Meßstelle 31.2 phasengleich, d.h. die Änderungen der Istlage der Welle treten zeitgleich auf. Eine Resonanzschwingung zweiter Ordnung wird dagegen dadurch erkannt, daß die Phasenlage der Veränderungen der Istlagen der Welle um 180° phasenverschoben auftreten. Damit besteht die Möglichkeit, durch die Magnetlager 9 und 10 eine der Anregung entgegengerichtete Frequenz zu erzeugen, so daß die Schwingungsamplitude im Resonanzbereich gedämpft wird.

Die in Fig. 6 dargestellte Anordnung stellt somit eine besonders vorteilhafte Möglichkeit dar, um bei einem Walzenmantel eine Schwingungsdämpfung auszuführen. Dabei werden die Magnetlager 9 und 10 mit einer der Schwingung entgegenwirkenden Frequenz angesteuert. Jede durch die Schwingung verursachte Lageveränderung der Welle bzw. eines Walzenmantels wird somit unmittelbar durch eine Gegenkraft des Magnetlagers gedämpft.

Die in den Figuren 1 bis 6 dargestellten Ausführungsbeispiele sind in Ausbildung der einzelnen Bauteile beispielhaft. Insbesondere können zur Erfassung der Istlage des Walzenmantels optische Sensoren verwendet werden, die aus einer Referenzposition heraus eine Abtastung des Walzenmantels vornehmen. So könnte beispielsweise die optische Messung mit einem Laserstrahl vorgenommen werden, der von einem Element, das am Walzenmantel angebracht ist, teilweise abgedeckt wird. Die Abdeckung würde mit Hilfe eines optischen Sensors erfaßt, der sich an einer Stelle befinden müßte, an der gemessen werden soll. Es kann auch sinnvoll sein, eine Messung zu einer stabilen Referenzstelle außerhalb der Walze vorzunehmen, um z.B. Schwingungen des gesamten Systems zu erfassen und zu kompensieren.

### Bezugszeichenliste

- 1: Walzenmantel
- 2: Stirnwand
- 3: Welle
- 4: Träger
- 5: Bund
- 6: Maschinengestell
- 7: Kupplung
- 8: Motorwelle
- 9: Magnetlager
- 10: Magnetlager
- 11: Lagerpolwicklungen
- 12: Erregerwicklung
- 13: Polelement
- 14: Lagerebenen
- 15: Lagerspalt
- 16: Nabe
- 18: Drehachse
- 19: Sensor

- 21: Steuereinheit
- 22: Stufe
- 23: Bund
- 24: Axiallager
- 25: Sensorträger
- 26: Ringraum
- 27: Öffnung
- 28: Radiallager
- 29: Magnetlager
- 30: Welle
- 31: Ebene
- 32: Steuergerät

## Patentansprüche

1. Walze zum Führen von zumindest einem Faden mit einem hohlzylindrischen Walzenmantel (1), mit einem Träger (4), an welchem der Walzenmantel (1) drehbar gelagert ist, mit zumindest einem Magnetlager (9), welches mehrere in Umfangsrichtung des Walzenmantels (1) verteilte Lagerpolwicklungen (11) am Träger (4) aufweist, und mit mehreren Sensoren (19) zur Bestimmung einer Ist-Lage des Walzenmantels (1), wobei die Sensoren (19) und die Lagerpolwicklungen (11) durch eine Steuereinheit (21) miteinander gekoppelt sind,
**dadurch gekennzeichnet, daß**
die Sensoren (19) mit Abstand zu dem Walzenmantel (1) und mit Abstand zu dem Träger (4) derart ortsfest positioniert sind, daß die Ist-Lage des Walzenmantels (1) relativ zu einer ortsfesten Referenzlage des Walzenmantels (1) bestimmbar ist.

2. Walze nach Anspruch 1,
**dadurch gekennzeichnet, daß**
mehrere auskragende Sensorträger (25) vorgesehen sind, die jeweils fest mit dem Maschinengestell (6) verbunden sind und die jeweils zumindest einen Sensor (19) tragen.

3. Walze nach Anspruch 2,
**dadurch gekennzeichnet, daß**
die Sensorträger (25) innerhalb eines zwischen dem Walzenmantel (1) und dem Träger (4) gebildeten Ringraumes (26) angeordnet sind.

4. Walze nach einem der vorgenannten Ansprüche,
**dadurch gekennzeichnet, daß**
die Sensoren (19) und die Lagerpolwicklungen (11) gemeinsam in einer Lagerebene (14) angeordnet sind.

5. Walze nach einem der Ansprüche 1 bis 3,
**dadurch gekennzeichnet, daß**
die Sensoren (19) und/oder die Lagerpolwicklungen (11) in mehreren benachbarten Ebenen (14.1,14.2) verteilt angeordnet sind.

6. Walze nach einem der Ansprüche 1 bis 5,
**dadurch gekennzeichnet, daß**
jedem der Lagerpolwicklungen (11) einer der Sensoren (19) zugeordnet ist, wobei die Steuereinheit (21) das Sensorsignal des Sensors (19) in ein Steuersignal zur Steuerung der zugeordneten Lagerpolwicklung (11) überführt.

7. Walze nach Anspruch 6,
**dadurch gekennzeichnet, daß**
die Lagerpolwicklungen (11) paarweise um 180° versetzt zueinander in einer Lagerebene (14) angeordnet sind und daß jedem Lagerpolpaar einer der Sensoren (19) zugeordnet ist, wobei die Steuereinheit (21) das Sensorsignal des Sensors (19) in ein Steuersignal zur Steuerung des zugeordneten Lagerpolpaares überführt.

8. Walze nach einem der Ansprüche 1 bis 5,
**dadurch gekennzeichnet, daß**
jedem der Lagerpolwicklungen (12) eine Gruppe von Sensoren (19) zugeordnet ist, wobei die Steuereinheit (21) die Sensorsignale der Sensoren (19) einer Gruppe in ein Steuersignal zur Steuerung einer der Lagerpolwicklungen (11) überführt.

9. Walze nach einem der vorgenannten Ansprüche,
**dadurch gekennzeichnet, daß**
der Walzenmantel (1) durch zwei radial wirkende Magnetlager (9, 10) gelagert ist, deren Lagerpolwicklungen (11) in zumindest zwei Lagerebenen (14.1, 14.2) angeordnet sind, und daß jedem Magnetlager (9, 10) eine Gruppe von Sensoren (19) zugeordnet ist, welche Sensoren (19) jeweils in einer benachbarten Ebene (31) zwischen den Lagerebenen (14) angeordnet sind.

10. Walze nach Anspruch 9,
**dadurch gekennzeichnet, daß**
jede Gruppe von Sensoren (19) mit einer Steuereinheit (21) verbunden ist, daß durch die Steuereinheit (21) eine Auswertung der Sensorsignale zur Lage- und Schwingungsbestimmung des Walzenmantels (1) ausführbar ist und daß durch die Steuereinheit (21) Steuersignale zur Lagekorrektur und Schwingungsdämpfung erzeugbar sind, die zur Steuerung den zugeordneten Lagerpolwicklungen (11) aufgegeben werden.

11. Verfahren zur Schwingungsdämpfung eines drehbar gelagerten Walzenmantels einer Walze, bei welchem der Walzenmantel durch zumindest ein radial wirkendes Magnetlager gelagert ist und bei welchem das Magnetlager in Abhängigkeit von einer Ist-Lage des Walzenmantels gesteuert wird, wobei
a) die Ist-Lage des Walzenmantels relativ zu einer ortsfesten Referenzlage des Walzenmantels erfaßt wird;
b) eine zeitliche Veränderung der Ist-Lage des Walzenmantels in Abhängigkeit einer Drehfrequenz des Walzenmantels erfaßt wird;
c) eine Folge von Steuersignalen für das Magnetlager aus der Veränderung der Ist-Lage des Walzenmantels bei der Drehfrequenz bestimmt wird, welche Steuersignale eine der Lageänderung des Walzenmantels entgegenwirkende Lagerkräfte an dem Walzenmantel bewirken, und
d) das Magnetlager durch die Folge von Steuersignalen bei der Drehfrequenz gesteuert wird.

12. Verfahren nach Anspruch 11,
**dadurch gekennzeichnet, daß**
die Ist-Lage des Walzenmantels in zwei Meßstellen erfaßt wird, daß jeder Meßstelle jeweils eine Lagerstelle mit einem Magnetlager zugeordnet ist und daß jedes Magnetlager durch eine Folge von Steuersignalen gesteuert wird, welche Steuersignale aus den Lageänderungen des Walzenmantels bestimmt sind.

13. Verfahren nach Anspruch 11 oder 12,
**dadurch gekennzeichnet, daß**
die Ist-Lage des Walzenmantels in einer Meßstelle durch vier Sensoren erfaßt wird, welche Sensoren in einer Ebene in Umfangsrichtung des Walzenmantels um 90° versetzt zueinander angeordnet sind.
